# EUROPEAN PATENT APPLICATION

(11) **EP 0 687 643 A1**
(43) Date of publication of application: **20.12.1995**
(21) Application number: 95850112.4
(22) Date of filing: 16.06.1995
(51) Int. Cl.: B66B 9/02, F16H 25/22, B66B 11/04

(54) **Elevator brake arrangement**

(30) Priority: 17.06.1994 SE 9402137
(71) Applicant: EG TECHNOLOGY AB, S-126 57 Hägersten (SE)
(72) Inventor: Eriksson-Pax, Rolf, S-126 57 Hägersten (SE); Gustafsson, Gunnar, S-139 00 Värmdö (SE)
(74) Representative: Lettström, Richard Wilhelm

(57) **Abstract**

The invention relates to an arrangement for a holding brake (42) for a screwdrive elevator machinery (2), comprising a screw (4) and a nut (6) rotatable, depending on the holding brake (42), by means of a drive pulley (14). The drive pulley (14) is rotatably mounted in a housing (18) connected to a guide in an elevator shaft. The housing is connected to the drive pulley (14) via the holding brake (42), which contains a free-wheel clutch (56). In the rotational direction for descent, the free-wheel clutch (56) is engaged and transmits a braking torque (Mb) to the nut (6), said torque being greater than a torque (Mv) generatable by the nut. In the rotational direction for ascent, the free-wheel clutch is disengaged. The machinery (2) is in motor operation both for lifting and lowering. A force distributor (34) sees to it that a braking torque (Mb) dependent on a force (F) does not assume excessively high values relative to the torque (Mv). The holding brake (42) has a brake disc (48) which is designed so that transmission of oblique loads and heat from the brake disc (48) to the free-wheel clutch (56) is prevented. An angle compensator (22) is arranged to compensate for angular deviations of up to 3° between the nut (6) and the drive pulley (14).

## Description

The present invention relates to an arrangement for a holding brake for a screw drive elevator machinery of the type described in the preamble to the attached claim 1.

An elevator machinery of this type is described in PCT/SE93/01091 with the same inventor, claiming priority from Swedish Patent Application 9203827-2. This machinery comprises a screw mounted in an elevator shaft, and a nut disposed thereon with a matching thread. Said nut is rotatably suspended in a housing provided with a drive means, which supports an elevator car and a payload. The housing and the nut are elements in a friction brake and are displaceable relative to each other against the acting load, between two limit positions along the centerline of the screw. The limit positions correspond to a rest position and an operating position for the machinery. The load is borne in the rest position by the screw via the housing, a friction wear layer, a drive gear and the nut. In the operating position, the disengaging device is energized, whereby the drive gear is unloaded and a thrust bearing is loaded instead. The load is then transferred to the screw through the housing, the disengaging device, a bearing sleeve, the thrust bearing and the nut.

For certain applications it is advantageous if the elevator machinery, while preserving reliability and safety margins, is as uncomplicated as possible and thus less costly. This is especially true for small elevators and lifts.

The purpose of the present invention is therefore to achieve an arrangement for a holding brake for an elevator machinery of the type described above, which has high efficiency and is simple and inexpensive but still reliable, and fulfills applicable regulations and which does not need to be connected to any external hydraulics or control units to regulate operation.

This is possible with an arrangement which has the features disclosed in the characterizing clause of the attached claim 1. Additional features and advantageous further developments and improvements of the invention are revealed in the dependent claims.

In contrast to previous designs, the friction brake in the device according to the invention is always activated with a braking torque which is at least as great as the torque generated by the nut under the effect of the load. A free-wheel arrangement makes it possible to allow the nut to operate freely when lifting load and to have a braking effect when the nut is rotated in the opposite direction for lowering. It is thus also possible to make the threads of the lifting screw with a lead angle which is greater than that for normal self-braking screws (usually at most 6°). The increased lead angle gives the following advantages among others: Improved efficiency, smaller motor, lower rpm in the lifting nut, which provides smoother operation and reduces the risk of vibration and noise as well as less heat generation and wear to the lifting nut, thus reducing the need for frequent lubrication and service.

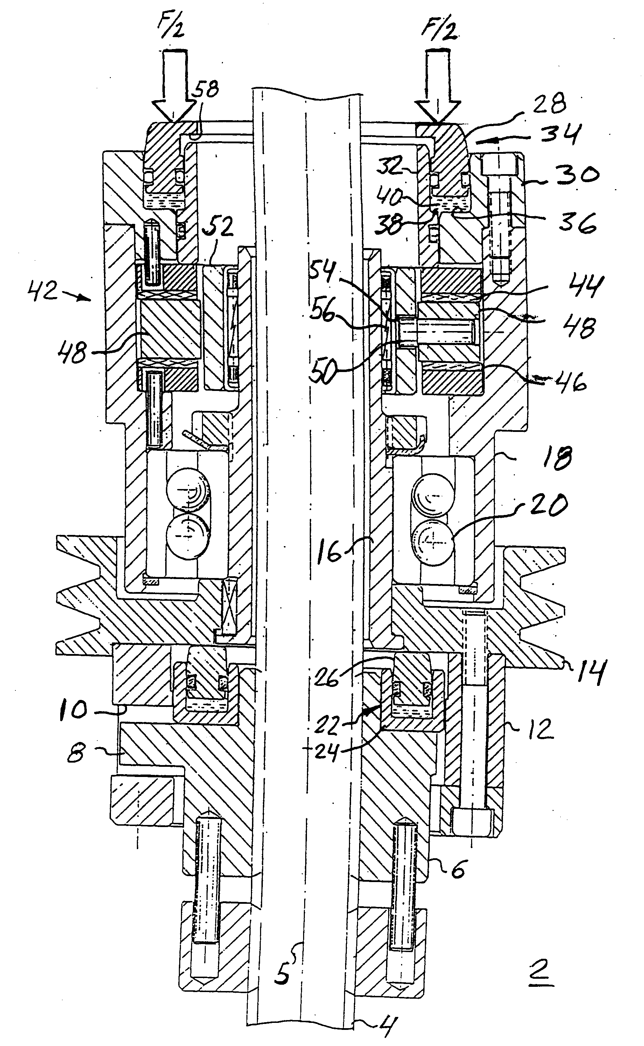

The invention will be described in more detail below with reference to a preferred embodiment shown in the accompanying drawing.

The single figure shows a side view in section of the arrangement according to the invention.

The elevator machinery 2 comprises a screw 4 which is non-rotatably mounted in an elevator shaft (not shown), said screw having a center axis 5 and a nut in engagement with the threads of the screw. The nut has at least one radially projecting drive pin 8, which is arranged in a cavity 10 in a driver housing 12, which is fixed to a drive pulley 14, which is in turn securely joined to a hollow shaft 16. The hollow shaft is rotatably mounted in a housing 18 by means of a double-row angular contact bearing 20.

On the side of the nut 6 facing the drive pulley 14, there is mounted an angle compensator 22, which has an annular piston 26 displaceably arranged in an annular cylinder 24. The annular piston 26 abuts against said side of the drive pulley 14 and encloses a volume of liquid in the annular cylinder 24. The angle compensator permits angular deviations of up to 3° between the alignment of the nut 6 and the housing 18, by virtue of the fact that the annular piston 26 "floats" on the enclosed volume of liquid and evenly distributes the contact pressure even at said angular deviations.

In order to make this compensation possible, the nut is also, depending on a suitable play between the pin 8 and the limiting surfaces of the cavity 10, limitedly movable axially and rotationally relative to the drive pulley 14, the hollow shaft 16 and the housing 18. The nut is centered relative to said components by the annular cylinder 24 and the driver housing 12. Except for this play, the nut 6 is prevented from rotating relative to the drive pulley 14.

The housing 18 is also joined to guide rails (not shown) in the elevator shaft and is loaded in the direction of the arrows by an elevator cage (not shown). A force F generated by the elevator cage and the payload acts on an annular piston 28, which along both its outer and inner diameter is sealingly displaceable, on the one hand, in an outer cylinder portion 30 arranged at the upper end of the housing 18, and, on the other hand, relative to an inner cylinder/piston portion 32, said three components constituting a hydraulic force distributor 34. At approximately the middle of the length of the outer cylinder portion 30, there is an internal radial collar 36 constituting the transition between a major inner diameter corresponding to the outer diameter of the annular piston 28, and a minor inner diameter along which the inner portion 32 is sealingly displaceable. At approximately the middle of the length of the portion 32, there is an external radial collar 38 which constitutes the transition between a major and a minor outer diameter of the portion 32, the minor diameter corresponding to the inner diameter of the annular piston 28. A chamber 40 formed between the annular piston 28 and the outer and inner cylinder portions 30;32 is filled with hydraulic fluid, which transfers the force F acting on the annular piston 28, on the one hand, to the outer cylinder portion 30 and, on the other hand, to the inner portion 32, distributed in direct proportion to the ratio between the area of the collar 38 and the area of the annular piston 28.

A holding brake 42 has brake shoes 44,46 non-rotatably joined to the housing 18. The brake shoes are provided on their sides facing a brake disc 48 with conventional brake linings. The brake shoe 46 is solidly joined to the housing 18 while both the brake shoe 44 and the brake disc 48 are axially movable to such an extent that the portion 32, which abuts against the top of the brake shoe 44, presses the brake shoe 44 against the brake disc 48, which is in turn pressed against the brake shoe 46 under the influence of the hydraulic pressure in the chamber 40. By means of driver pins 50 mounted in the brake disc 48 and extending radially inwards to act on corresponding cavities 54 in a sleeve 52 surrounding the hollow shaft 16, each of which cavities having such a shape that there is the required axial play to take up any angular deviations between the brake disc 48 and a free-wheel clutch 56, the sleeve 52 with the free-wheel clutch 56 is held axially on the hollow shaft 16. Rotationally, the play between each pin 50 and the associated cavity 54 should be as small as is practically possible without inhibiting the axial movement.

The sleeve 52 is mounted diametrically surrounding the free-wheel clutch 56, which is of a type known per se and is in turn mounted at the upper end of the hollow shaft 16. The free-wheel clutch 56 is arranged so that, during lifting, it permits the hollow shaft 16, and thus the nut 6, to be rotatable without being impeded by the brake disc 48 between the brake shoes. For lowering, when the nut 6 and the hollow shaft 16 are rotated in the opposite direction, the free-wheel clutch 56 assumes an engaged position, and the brake disc is caused to rotate, provided that a torque acting from the drive pulley 14 via the hollow shaft 16 is capable of overcoming the brake torque arising between the brake disc and the brake shoes.

A holding brake torque Mb required for secure braking of the nut 6 on the screw 4 must in all situations be greater than the torque Mv generated by the thread on the nut for each load. Thus the elevator cage cannot descend unless the drive pulley 14 is also driven during descent. The torque Mv is dependent on the pitch angle of the thread, the coefficient of friction, transmission losses and the payload in question. According to the preferred embodiment, if the brake torque is always to be sufficiently great without generating unnecessary amounts of heat at small payloads, the contact pressure between the frictional surfaces of the brake 42 is dependent on the payload.

To use the entire load as the contact pressure F on the frictional surfaces of the brake shoes 44,46 generates, however, an unnecessarily large braking torque Mb, resulting in excessive heat and wear. Therefore, only a portion, always however a proportional portion, of the load is used to press together the frictional surfaces. Practical trials have shown that it is necessary to use less than 15% of the load to achieve fully satisfactory braking effect in most occurring elevator situations. If the ratio between the area of the annular piston 28 and the area of the cylinder/annular piston portion 32 is selected as 4:1, due to the fact that the transferred portion of the force F is directed proportional to this ratio, 1/4 of the force F will be used to press the frictional surfaces together, providing a satisfactory margin of safety.

In order to prevent the elevator cage from descending, if the hydraulic fluid in the chamber 40 should for some reason leak out, the annular piston 28 is provided with a collar 58 which, if the chamber 40 is completely emptied of hydraulic fluid, will rest against the cylinder/annular piston portion 32, which will then transmit the entire force F to the holding brake 42. The braking torque Mb will thus be increased manifold over the motor torque, which will be indicated in the motor operation, and the machinery will stop.

If the braking torque for some reason should deviate from predetermined values, e.g. due to a high degree of wear in the brake linings, this can also be indicated during descent in the motor operation and prevent continued operation of the machinery.

Within the scope of the invention it is also possible to use, instead of the load-dependent holding brake, a spring-loaded leaf brake package. Adaption to the current load interval is then possible by adjustable pretensioning of the contact pressure of the frictional surfaces to each other, e.g. by means of mounting a larger or smaller number of springs acting on the brake leaves.

## Claims

1. Arrangement for a holding brake (42) for a screw drive elevator machinery (2), comprising a screw (4) and a nut (6), rotatable, depending on the holding brake (42), by means of a drive pulley or wheel (14), said drive pulley or wheel (14) being rotatably mounted in a housing (18), connected to a guide in an elevator shaft, said housing (18) being connected to the drive pulley or wheel (14) via the holding brake in at least one rotational direction, **characterized** in that said brake (42) has frictional surfaces which are always pressed together with a constant force dependent on the load, and that the brake (42) is made to act between the nut (6) and the housing (18) via a driver housing (12) attached to the drive pulley or wheel (14), with a braking torque (Mb) which is at least as great as any torque (Mv) generatable by the nut under the influence of the applied load force (F).

2. Arrangement according to Claim 1, **characterized** in that the brake (42) has at least one brake disc (48) which, via at least one free-wheel clutch (56), is connected to a hollow shaft (16), supporting the drive pulley or wheel (14), and that the brake has at least one brake shoe (44,46) which is non-rotatably joined to the housing (18).

3. Arrangement according to Claim 2, **characterized** in that the brake disc (48) is held with a predetermined play in a sleeve (52), to thereby reduce the transmission of heat and any oblique loads from the brake disc (48) via the sleeve (52) to the free-wheel clutch (56).

4. Arrangement according to one of Claims 1-3, **characterized** in that the elevator machinery (2) is suspended on the screw (4) by means of an angle compensator (22) arranged between the nut (6) and the drive pulley or wheel (14), by means of which compensator angular deviations between the nut and the drive pulley or wheel can be compensated, and in that the nut is essentially non-rotatably joined to the drive pulley or wheel via said driver housing (12).

5. Arrangement according to one of Claims 2-4, **characterized** in that a force distributor (34) is arranged between the force (F), on the one hand, and the housing (18) or the brake shoe (44), on the other hand, in such a way that a major portion of the force (F) is absorbed directly by the housing (18).

6. Arrangement according to Claim 5, **characterized** in that at least 1/4 of the force (F) is taken up by the brake shoe (44).

7. Arrangement according to Claim 5, **characterized** in that at least 3/4 of the force (F) is taken up by the housing (18).

8. Arrangement according to one of Claims 5-7, **characterized** in that the brake torque (Mb) is not greater than that required to prevent spontaneous descent of the nut (6) at any conceivable load, by virtue of the fact that the force distributor (34) is hydraulic and the force (F) is distributed by means of the same in direct proportion to the ratio between the area of a collar (38) on a cylinder/annular piston portion (32) and the area of an annular piston (28), which are arranged in the force distributor (34).

9. Arrangement according to one of the preceding claims, **characterized** in that the braking torque (Mb) during descent assumes an indicatable value which is changed depending on disturbances in the brake.

10. Arrangement according to one of Claims 8-9, **characterized** in that the annular piston (28), when there is no hydraulic fluid in a chamber (40) defined between the annular piston, the cylinder/annular piston portion (32) and a cylinder portion (30), will come into direct contact against the cylinder/annular piston portion (32), so that the entire load (force F) will be transmitted to the brake shoe (44).
